(19) Europäisches Patentamt / European Patent Office / Office européen des brevets

(11) **EP 4 749 155 A1**

(12) **EUROPEAN PATENT APPLICATION**

(43) Date of publication:
**27.05.2026 Bulletin 2026/22**

(21) Application number: **24215353.4**

(22) Date of filing: **26.11.2024**

(51) International Patent Classification (IPC):
***F16F 9/30*** *(2006.01)*

(52) Cooperative Patent Classification (CPC):
**F16F 9/306**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ASML Netherlands B.V.**
**5500 AH Veldhoven (NL)**

(72) Inventors:
- **GEURINK, Rudolf**
  **Veldhoven (NL)**
- **VIEIRA GARRIDO, Rui, Pedro**
  **Veldhoven (NL)**
- **MAAS, Wietse, Johannes, Antonius**
  **Veldhoven (NL)**
- **KUINDERSMA, Lucas**
  **Veldhoven (NL)**
- **VERMEULEN, Johannes, Petrus, Martinus, Bernardus**
  **Veldhoven (NL)**

(74) Representative: **ASML Netherlands B.V.**
**Corporate Intellectual Property**
**P.O. Box 324**
**5500 AH Veldhoven (NL)**

(54) **CONSTRAINED LAYER DAMPER COMPONENT**

(57) Disclosed is a constrained layer damper component, comprising: a base layer having a lower surface and an upper surface; a constraining layer; a viscoelastic layer positioned between the base layer and the constraining layer; and a weakening feature arranged to provide a localized portion of the constrained layer damper component having a reduced bending stiffness compared to remaining portions of the constrained layer damper component.

200

z
x
206
204
202
210

**Fig.6**

EP 4 749 155 A1

## Description

### FIELD

The present invention relates to a constrained layer damper component and an apparatus comprising such a constrained layer damper. In particular, the present invention relates to constrained layer damper component comprising a weakening feature.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda / NA$, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In semiconductor manufacturing equipment, typically high performance positioning systems are used to obtain high throughput systems, e.g. wafer stages for inspection or lithography. The supporting frames of related equipment such as position sensors, metrology sensors or optical elements need to be very accurately positioned with respect to a point-of-interest on the semiconductor wafer. To achieve this, high stiffness constructions, such as frames, are very common. Typically, the constructions used in semiconductor manufacturing equipment have low damping. Dynamic excitation of such a frame by fast moving stages can lead to dynamical disturbances. With dynamic excitation of high stiffness designs with low damping, settling time is needed to achieve nanometer position accuracy while keeping high throughput. Increased damping helps to reduce these settling times.

A tuned mass damper is an effective solution to damp one specific frequency. This means it cannot be applied to a broader range of frequencies. This solution can be made relatively inexpensive with standard materials, but adds mass to a design and requires significant volume.

Another known technique involves manufacturing a (sub)frame from exotic materials (e.g. carbon fiber plates) which have a higher specific stiffness and/or internal damping than for example steel and aluminum. However, standard manufacturing techniques cannot be used with this technique and complexity is increased, for example inserts have to be used when parts are to be screwed on. We refer herein to a frame as a construction supporting the whole machine or a significant part thereof. We refer herein to a subframe as a construction supporting a number of modules within a machine.

Active damping can also be applied as an alternative solution, for example using servo controls. In some cases, this can effectively attenuate (sub)frame vibrations while adding limited mass. This solution does require additional sensors, actuators and a control system thereby increasing complexity.

### SUMMARY

Aspects of the present disclosure relate to a constrained layer damper component which allows to significantly reduce the settling time by increasing the damping while retaining high natural frequency. This is achieved using existing manufacturing techniques and widely used base materials, resulting in an effective solution that avoids complexities of known techniques.

According to a first aspect of the invention, there is provided a constrained layer damper component, comprising: a base layer having a lower surface and an upper surface; a constraining layer; a viscoelastic layer positioned between the base layer and the constraining layer; and a weakening feature arranged to provide a localized portion of the constrained layer damper component having a reduced bending stiffness compared to remaining portions of the constrained layer damper component.

The weakening feature may extend through the full width of the constrained layer damper component in a direction along an axis orthogonal to a longitudinal axis of the constrained layer damper component.

The weakening feature may extend through a portion of the width of the constrained layer damper component in a direction along an axis orthogonal to a longitudinal axis of the constrained layer damper component.

The base layer may comprise the weakening feature.

The weakening feature may extend in the direction along the longitudinal axis from the upper surface of the base layer towards the lower surface of the base layer.

A portion of the base layer may extend in a direction along the longitudinal axis between the upper surface of the base layer and the weakening feature.

The viscoelastic layer may comprise at least a portion of the weakening feature.

The weakening feature may extend in the direction along the longitudinal axis from an upper surface of the viscoelastic layer towards the lower surface of the base layer.

A portion of the viscoelastic layer may extend in a direction along the longitudinal axis between an upper surface of the viscoelastic layer and the weakening feature.

The constraining layer may comprise at least a portion of the weakening feature.

The weakening feature may comprise a cutout forming a cavity in the constrained layer damper component, the cutout extending in a direction along an axis orthogonal to a longitudinal axis of the constrained layer damper component.

A portion of the base layer may extend in a direction along the longitudinal axis between the lower surface of the base layer and the cutout.

The weakening feature may extend in the direction along the longitudinal axis to have a height that is at least 40% of the height of base layer, optionally at least 50% of the height of base layer, further optionally at least 60% of the height of base layer.

The weakening feature may extend in the direction along the longitudinal axis to have a height that is less than or equal to 80% of the height of base layer, optionally less than or equal to 75% of the height of base layer, further optionally less than or equal to 70% of the height of base layer.

The weakening feature may comprise a material having a Young's modulus that is less than a Young's modulus of a material of the base layer.

The localized portion of the constrained layer damper component may have a reduced width in a direction along an axis orthogonal to a longitudinal axis of the constrained layer damper component, compared to the remaining portions of the constrained layer damper component.

The base layer may comprise the localized portion having the reduced width.

The constraining layer may comprise the localized portion having the reduced width.

The viscoelastic layer may comprise the localized portion having the reduced width.

The weakening feature may be located in a central region along the length of the constrained layer damper component, the central region having a length that is less than 50% of the length of the constrained layer damper component, the central region centered on the center of the length of the constrained layer damper component.

The weakening feature may be located at the center of the length of the constrained layer damper component.

The weakening feature may be located closer to an end of the constrained layer damper component than to the center of the length of the constrained layer damper component.

According to another aspect of the invention there is provided an apparatus comprising the constrained layer damper component according to any of the embodiments described herein.

The apparatus may be one of: a metrology apparatus, an inspection apparatus, a lithographic apparatus, an etching apparatus, and a robotic apparatus.

## BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a known constrained layer damper component;
- Figure 5 depicts the first bending mode of the known constrained layer damper component;
- Figure 6 depicts a constrained layer damper component according to some embodiments of the present disclosure, the base layer comprising a cutout;
- Figure 7 is a perspective view of a base layer of the constrained layer damper component of Figure 6;
- Figures 8a-c depict a side view of a portion of the constrained layer damper component of Figure 6 illustrating that the cutout may extend to different heights within the constrained layer damper component;
- Figure 9a depicts a side view of a portion of the constrained layer damper component of Figure 6 illustrating that the cutout may form a slot;

- Figure 9b depicts a side view of a portion of the constrained layer damper component of Figure 6 whereby the cutout is formed by two holes extending through the width of the constrained layer damper component;
- Figure 10a depicts shear strain behaviour in a viscoelastic layer of a known constrained layer damper component during bending;
- Figure 10b depicts shear strain behaviour in a viscoelastic layer of the constrained layer damper component of Figure 6;
- Figure 11 depicts a constrained layer damper component in the form of a hollow beam, the base layer comprising a cutout;
- Figure 12a depicts shear strain behaviour in a viscoelastic layer of the hollow beam with, and without, a cutout;
- Figure 12b depicts cumulative shear strain in a viscoelastic layer of the hollow beam with, and without, a cutout;
- Figure 13 depicts the under-damped free response of a mass-spring-damper system given nonzero initial conditions;
- Figure 14a depicts the bending frequency for two beams of different heights and varying cutout heights;
- Figure 14b depicts the damping ratio for the two beams of different heights and varying cutout heights;
- Figure 14c depicts the exponential decay rate for the two beams of different heights and varying cutout heights;
- Figure 15 depicts a constrained layer damper component according to some embodiments of the present disclosure, the base layer comprising a material having a Young's modulus that is less than a Young's modulus of a material of the base layer.
- Figures 16a-d depict a side view of a portion of the constrained layer damper component of Figure 15 illustrating the material having a Young's modulus that is less than a Young's modulus of a material of the base layer, may extend to different heights within the constrained layer damper component;
- Figure 17a depicts a constrained layer damper component according to some embodiments of the present disclosure, the constrained layer damper component comprising a portion having a reduced width.
- Figure 17b depict a side view of a portion of the constrained layer damper component of Figure 15 illustrating a portion of the base layer of the constrained layer damper component having the reduced width.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

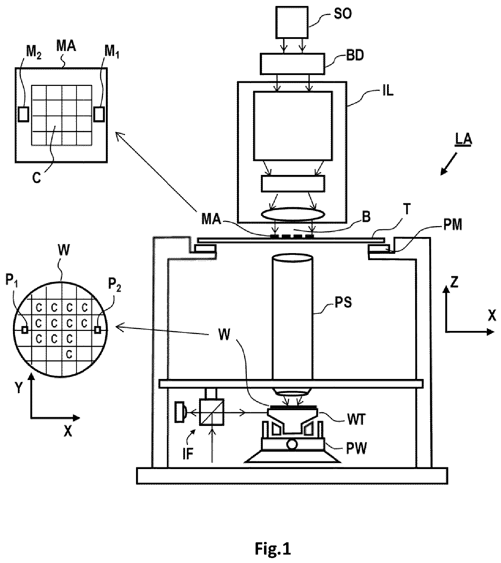

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g.,

water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

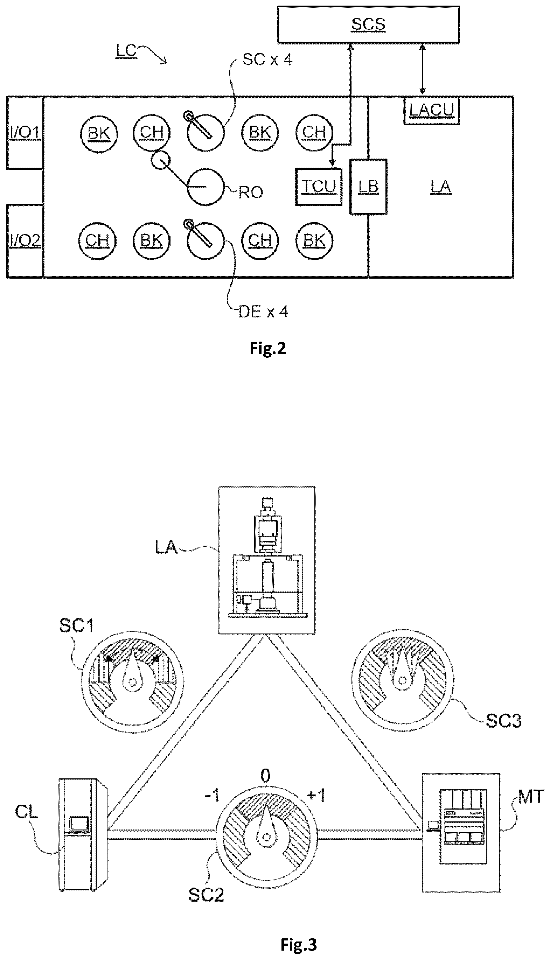

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window.

The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Figure 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

The constrained layer damper component according to aspects of the present disclosure may be incorporated into a lithographic apparatus such as the lithographic apparatus LA described above. A metrology tool MT (such as a scatterometer, topography measurement system, or position measurement system mentioned above), an inspection apparatus, a particle beam apparatus, a robotic apparatus, or an etching apparatus may also comprise the constrained layer damper component according to aspects of the present disclosure.

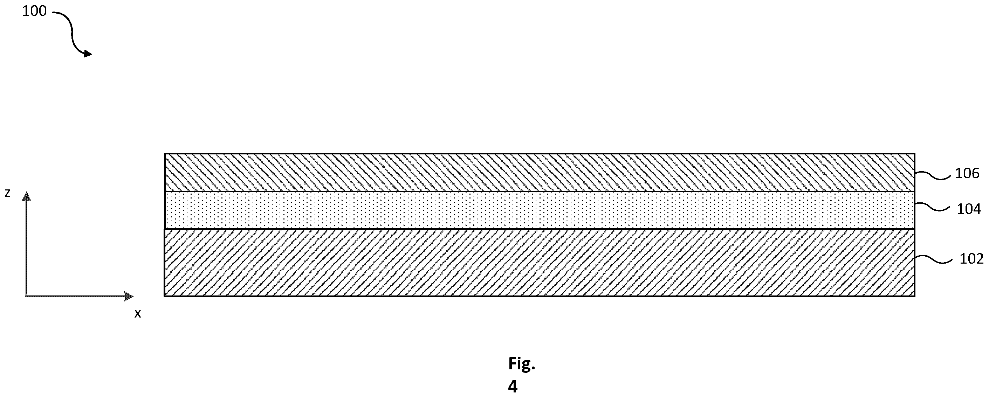

The constrained layer damper component according to aspects of the present disclosure is based upon the known constrained layer damper design which is illustrated in Figure 4.

Figure 4 illustrates a side view of a known constrained layer damper component 100 in the form of a beam. It will be appreciated that the known constrained layer damper design can be applied to other structural components such as a plate or other member. The known constrained layer damper component 100 comprises a base layer 102, a viscoelastic (VE) layer 104, and a constraining layer 106.

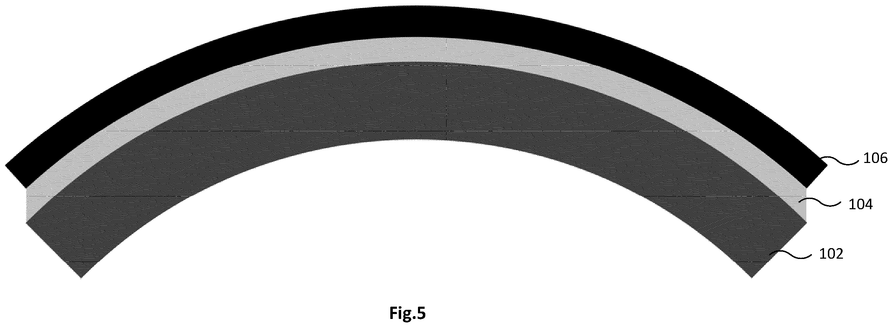

By adding the VE layer 104 and the constraining layer 106 to an existing base layer 102, vibrations in the main structure can be moderately damped. The working principle of the known constrained layer damper component 100 is shown in Figure 5, which illustrates the first bending mode of the known constrained layer damper component 100.

Due to the bending of the base layer 102, the top part of this beam will extend. Since the VE layer 104 is coupled (e.g. bonded) to the base layer 102, the bottom side of the VE layer 104 will extend by a similar amount. The constraining layer 106 is connected to the base layer 102 via the VE layer 104, and will therefore bend similarly as the base layer 102. Therefore, the bottom side of the constraining layer 106 will contract, and hence so does the top side of the VE layer 104. This means there is a length difference between the top and bottom side of the VE material, resulting in significant shear strain in the VE layer 104. Since a VE material is characterized by a complex shear modulus $G^* = G' + iG''$, this shear strain will dissipate energy and thus dampen the structure.

Embodiments of the present disclosure relate to the incorporation of a weakening feature that is arranged to provide a localized portion of the constrained layer damper component having a reduced bending stiffness compared to (e.g. all) remaining portions of the constrained layer damper component.

Bending stiffness is the resistance of a member against bending, and is proportional to the factor $EI$, where the Young's modulus ($E$) is a material property (material stiffness), and the second moment of area ($I$) is a geometric property. For a beam having a rectangular cross-section: $I = \frac{bh^3}{12}$ where $b$ is the width of the beam, and $h$ is the height of the beam.

The weakening feature may come in different forms.

Embodiments of the present disclosure are first described with reference to the weakening feature comprising a cutout forming a cavity in the constrained layer damper component. These embodiments provide the localized portion of the constrained layer damper component having a reduced bending stiffness by reducing the second moment of area (*I*) to reduce the factor *EI*. The constrained layer damper component according to aspects of the present disclosure is described with reference to a co-ordinate system whereby the height of the constrained layer damper component extends vertically along a longitudinal axis (z-axis) of the constrained layer damper component, the length of the constrained layer damper component extends horizontally along an x-axis orthogonal to the z-axis, and the width of the constrained layer damper component extends horizontally along a y-axis orthogonal to the z-axis.

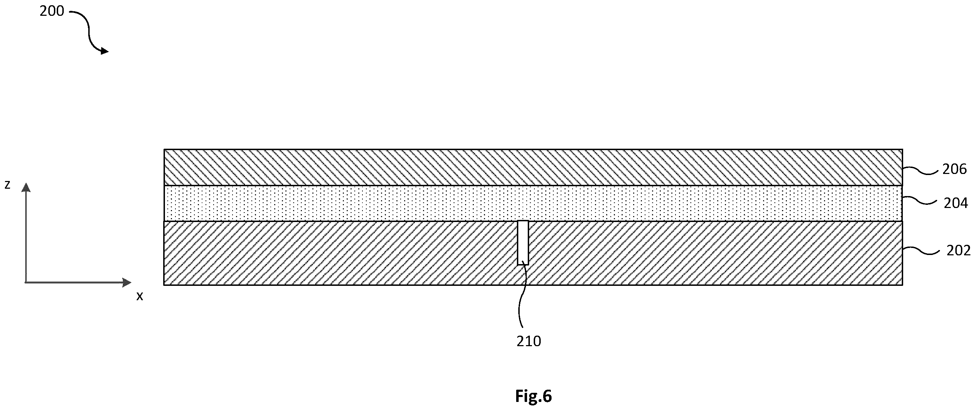

Figure 6 illustrates a side view of a constrained layer damper component 200 according to some embodiments of the present disclosure. The constrained layer damper component 200 comprises a base layer 202, a viscoelastic (VE) layer 204, and a constraining layer 206. The base layer 202 has a height $H_{bl}$ in the direction along a z-axis of the constrained layer damper component 200. The VE layer 204 has a height $H_{vel}$ in the direction along the z-axis. The constraining layer 206 has a height $H_{cl}$ in the direction along the z-axis. The height of the base layer 202 may be greater than, or equal to the height of the constraining layer 206 i.e. $H_{bl} >= H_{cl}$. The height of the VE layer 204 ($H_{vel}$) may be less than, or equal to, the height of the base layer 202 ($H_{bl}$) and/or the height of the constraining layer 206 ($H_{cl}$). The base layer 202 has a lower surface and an upper surface. The VE layer 204 has a lower surface and an upper surface. The lower surface of the VE layer 204 is coupled to the upper surface of the base layer 202. It will be appreciated that a variety of techniques may be used to bond the VE layer 204 to the base layer 202. For example, the VE layer 104 may be vulcanized or glued to the base layer 202. The constraining layer 206 has a lower surface and an upper surface. The lower surface of the constraining layer 206 is coupled (e.g. bonded) to the upper surface of the VE layer 204. It will be appreciated that a variety of techniques may be used to bond the VE layer 204 to the constraining layer 206. For example, the VE layer 104 may be vulcanized or glued to the constraining layer 206. The base layer 202 may comprise for example steel, titanium, carbon fiber, or aluminum. The VE layer 204 comprises a viscoelastic material.. A viscoelastic material has both an elastic and a viscous component; the latter giving the material a time-dependent strain rate. This results in the stress-strain diagram of a viscoelastic material being characterized by a hysteresis loop. The viscoelastic material may comprise FPM rubber, NBR rubber or other rubber compounds. The constraining layer 206 may comprise for example steel, titanium, carbon fiber, or aluminum. It will be appreciated that these are merely example materials and embodiments extend to other materials not specifically referred to herein.

The bending stiffness (i.e. the factor *EI*) of the base layer 202 $EI_{bl}$ may be greater than, or equal to the bending stiffness of the constraining layer 206 $EI_{cl}$ i.e. $EI_{bl} >= EI_{cl}$, this may be achieved in a number of different ways. For example $EI_{bl} >= EI_{cl}$ may be achieved by (i) using particular heights for the base layer 202 and the constraining layer 206 e.g. $H_{bl} >= H_{cl}$, (ii) using particular widths for the base layer 202 and the constraining layer 206, and/or (iii) through the material selection for the base layer 202 and the constraining layer 206.

The constrained layer damper component 200 shown in Figure 6 may be a beam (solid or hollow), a plate, a member, or a portion of a larger structure (the other portions of which not being shown Figure 6). The constrained layer damper component 200 illustrated in Figure 6 comprises a cutout 210. The cutout 210 may form a slot in the constrained layer damper component 200.

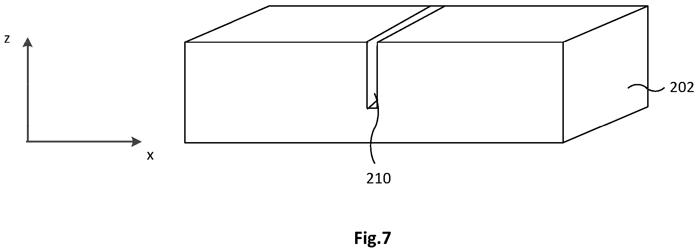

Figure 7 illustrates a perspective view of the base layer 202 which comprises the cutout 210. As shown in Figure 7 the cutout 210 may extend horizontally through the full width of the base layer 202 in a direction along the y-axis orthogonal to the z-axis of the constrained layer damper component 200.

Alternatively, the cutout 210 may not extend through the full width of the base layer 202 in a direction along the y-axis, and instead extend through only a portion of the width of the base layer 202 in a direction along the y-axis. In one example, the cutout 210 may extend from a sidewall of the base layer 202 into the interior of the base layer 202 without extending to the opposing sidewall of the base layer 202. In this example, in a similar manner to when the cutout 210 extends through the full width of the base layer 202, a cavity formed by the cutout 210 is in fluidic communication with an environment of the constrained layer damper component 200. In another example, the cutout 210 may not extend to either sidewall of the base layer 202 such that the cavity formed by the cutout 210 is not in fluidic communication with an environment of the constrained layer damper component 200 (i.e. the cutout 210 is not in contact with an outer surface of the constrained layer damper component 200).

As shown in Figure 6, the cutout 210 may originate from the upper surface of the base layer 202 and extend vertically downwards in a direction along the z-axis of the constrained layer damper component 200 towards the lower surface of the base layer 202.

In other implementations, a portion of the base layer may extend in a direction along the z-axis between the upper surface of the base layer 202 and the cutout 210. For example, the cutout 210 may be formed by drilling one or more holes which extend through the width of the base layer 202 in a direction along the y-axis. In implementations in which the cutout 210 is formed by a single hole, a portion of base layer 202 may extend vertically downwards in a direction along the z-axis between the upper surface of the base layer 202 and the top of the hole, and a portion of base layer 202 may extend vertically downwards in a direction along the z-axis between the bottom of the hole and the lower surface of the base layer 202. In implementations in which the cutout 210 is formed by multiple holes these holes may be positioned adjacent each other along the z-axis(e.g. above each other) and a portion of base layer 202 may extend vertically downwards in a direction along the z-axis between the upper surface of the base layer 202 and the top of the highest hole (the hole closest to the upper surface of the base layer 202), and a portion of base layer 202 may extend vertically downwards in a direction along the z-axis between the bottom of the lowest hole (the hole closest to the lower surface of the base layer 202) and the lower surface of the base layer 202.

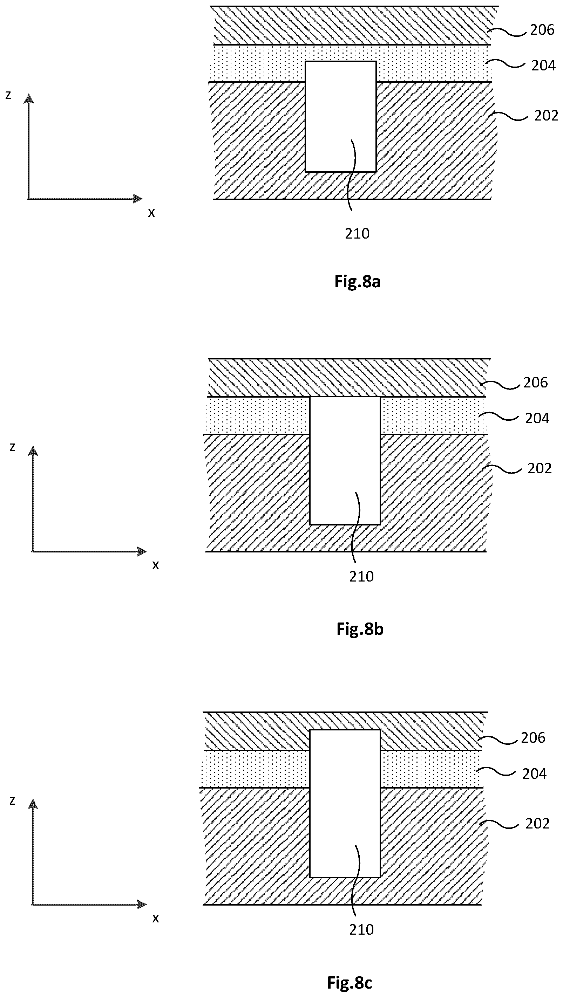

Figure 8a illustrates a side view of a portion of an example constrained layer damper component 200 whereby both the base layer 202 and the VE layer 204 comprise the cutout 210. As shown in Figure 8a, in this example the cutout 210 does not extend through the full height of the VE layer 204, such that a

a portion of the VE layer 204 extends vertically downwards in a direction along the z-axis between the upper surface of the VE layer 204 and the cutout 210.

Figure 8b illustrates a side view of a portion of another example constrained layer damper component 200 whereby both the base layer 202 and the VE layer 204 comprise the cutout 210. As shown in Figure 8b, in this example the cutout 210 extends through the full height of the VE layer 204, and the cutout 210 originates from the upper surface of the VE layer 204 and extends vertically downwards in a direction along the z-axis of the constrained layer damper component 200 towards the lower surface of the base layer 202.

Figure 8c illustrates a side view of a portion of another example constrained layer damper component 200 whereby each of the base layer 202, the VE layer 204, and the constraining layer 206 comprise the cutout 210. Figure 8c illustrates that whilst the constraining layer 206 may comprise the cutout 210, in these embodiments the cutout 210 does not extend through the full height of the constraining layer 206, such that a portion of the constraining layer 206 extends vertically downwards in a direction along the z-axis between the upper surface of the constraining layer 206 and the cutout 210.

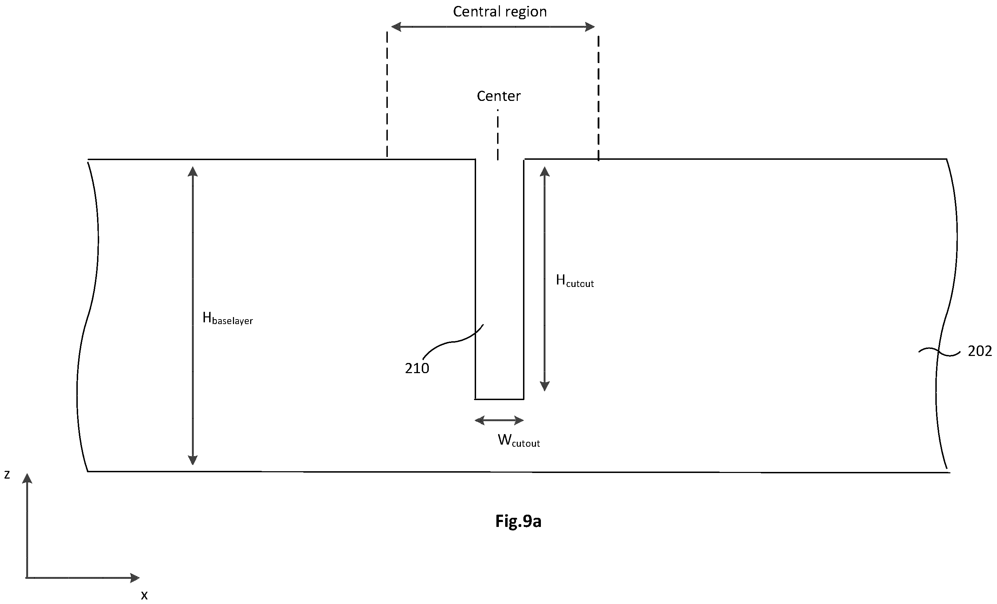

Figure 9a illustrates a side view of a portion of the base layer 202 comprising a cutout 210 in the form of a slot which may be implemented in any of the above described examples of the constrained layer damper component 200. Whilst for ease of illustration the Figures show the slot as having a rectangular cross-sectional shape, it will be appreciated that the slot formed in one or more layers of the constrained layer damper component 200 may not have a perfectly rectangular cross-sectional shape due to the design choice for the slot or the manufacturing technique employed to create the slot. Furthermore, embodiments are not limited to the slot formed in one or more layers of the constrained layer damper component having a generally rectangular cross-sectional shape. For example, the slot formed in one or more layers of the constrained layer damper component may have a circular, triangular or other cross-sectional shape.

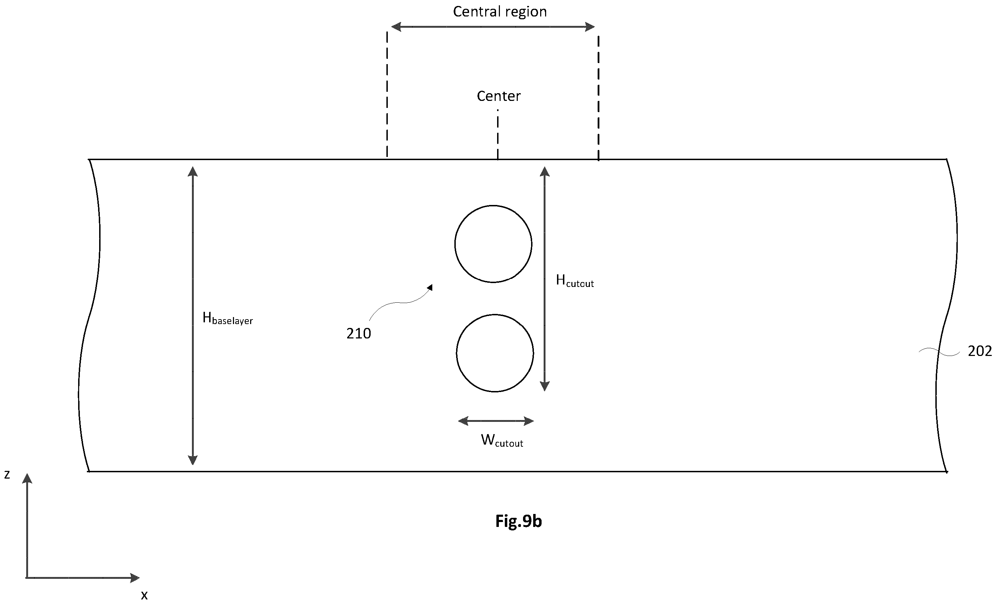

Figure 9b illustrates a side view of a portion of the base layer 202 comprising a cutout 210 formed by two holes which extend horizontally through the width of the base layer 202 in a direction along the y-axis, which may be implemented in any of the above described examples of the constrained layer damper component 200.

As shown in both Figure 9a and Figure 9b, the cutout 210 extends in the direction along the z-axis to have a height $H_{cutout}$. The height $H_{cutout}$ is measured from the upper surface of the base layer 202 to the bottom of the cutout 210. Depending on its height, the cutout 210 will influence the behaviour of the first bending mode of the constrained layer damper component 200, affecting not only shape, but also frequency and damping.

The height $H_{cutout}$ may be at least 40% of the height of base layer, optionally at least 50% of the height of base layer, further optionally at least 60% of the height of base layer.

The height $H_{cutout}$ may be less than or equal to 80% of the height of base layer, optionally less than or equal to 75% of the height of base layer, further optionally less than or equal to 70% of the height of base layer.

The cutout 210 has a width $W_{cutout}$ in a direction along the x-axis. The width $W_{cutout}$ of the cutout 210 may be less than 50mm wide, optionally less than 25mm wide, optionally less than 10mm wide, optionally less than 5mm wide, optionally less than 2mm wide. The width $W_{cutout}$ of the cutout 210 may be at least 0.5mm.

The cutout 210 may be located at the center of the length (in a direction along the x-axis) of the constrained layer damper component 200, or located in a central region along the length of the constrained layer damper component 200, for example in embodiments whereby the constrained layer damper component 200 is supported at both ends (along its length) e.g. as a two-sided suspension. The central region is centered on the center of the length of the constrained layer damper component 200. The central region may have a length that is less than 50% of the length of the constrained layer damper component. The central region may have a length that is at least 5%, optionally at least 10%, optionally at least 20%, optionally at least 30%, optionally at least 40%, of the length of the constrained layer damper component 200.

The cutout 210 may be located closer to an end of the constrained layer damper component 200 than to the center of the length of the constrained layer damper component 200, for example in embodiments whereby the constrained layer damper component 200 is supported at only a single end e.g. as a single-sided suspension (cantilever)

The introduction of a cutout 210 in the base layer 202 influences the bending behaviour of the constrained layer damper component 200. Because the constrained layer damper component 200 has been locally weakened in the center (or central region), most of the bending will occur at this point. Depending on the height of the cutout 210, the remaining material underneath the cutout 210 will act somewhat like a hinge. This will influence shear strain distribution in the VE layer 204.

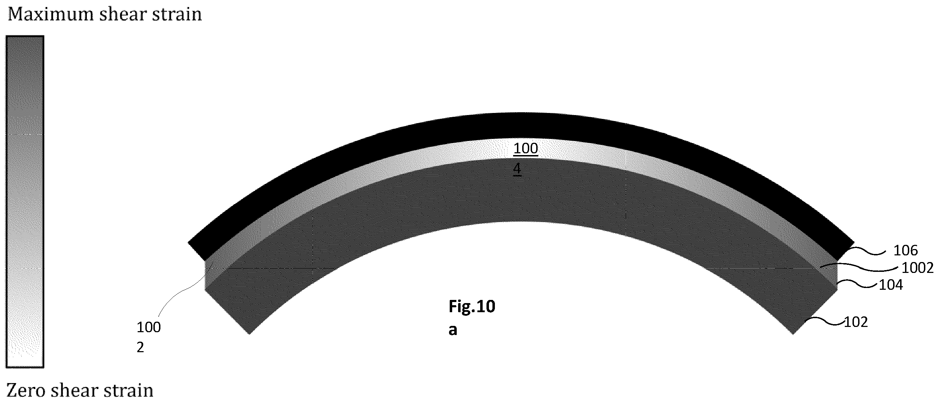

To indicate this difference, the shear strain in the VE layer 104 of a known constrained layer damper component 100 is illustrated in Figure 10a. The shear strain distribution is shown in Figure 4 for a simply supported base layer. As can be seen, in the center 1004 of the VE layer 104 the shear strain is zero, as there is no length difference between the base layer 102 and the constraining layer 106. This length difference builds up towards both ends of the known constrained layer damper component 100, hence the shear strain is maximum at both ends 1002 of the VE layer 104.

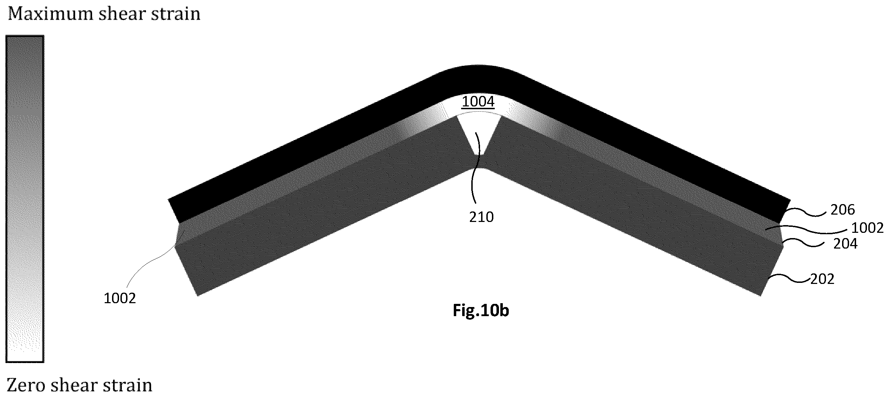

The shear strain behaviour in the VE layer 204 of the constrained layer damper component 200 with a cutout 210 is illustrated in Figure 10b. As most of the bending now occurs locally around the center of the constrained layer damper component 200, this is also where most of the increase in shear strain in the VE layer 204 occurs. This means that the shear strain in the VE layer 204 is close to its maximum value over almost its full path length (the path taken along the VE layer 204 from the cutout 210 towards both ends of the constrained layer damper component 200. That is, the shear strain in the VE layer 204 is close to its maximum value over almost its full length. In contrast, in the known constrained layer damper component 100 this only occurs at both ends. This means that by introducing the cutout 210 (and other forms of weakening feature described herein), the VE material towards the center of the beam is now more effectively used for damping.

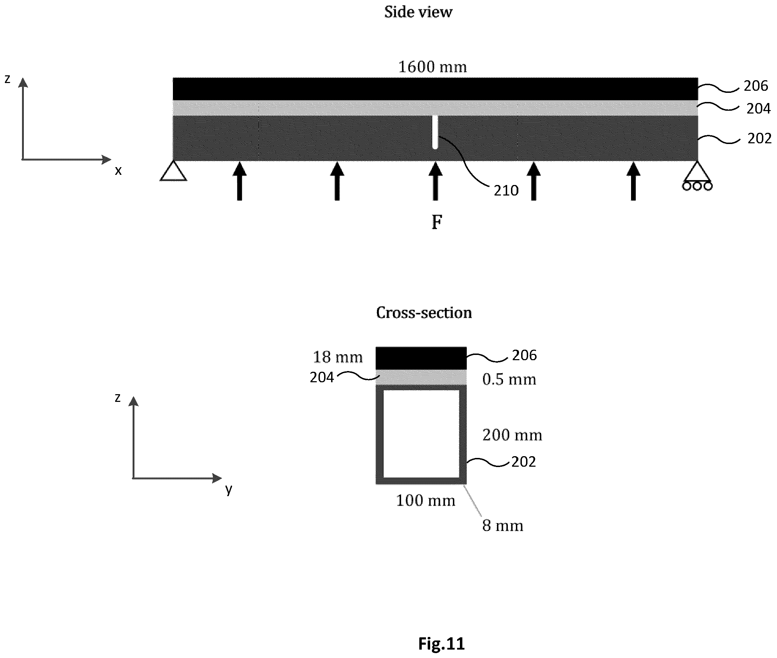

To confirm this, a finite element method (FEM) analysis was performed for a constrained layer damper component 200 in the form of a hollow beam, which is shown in Figure 11. As shown in Figure 11, the example hollow beam has a length of 1600 mm and a width of 100 mm. The height of the base layer 202 is 200 mm, the height of the VE layer 204 is 0.5 mm, and the height of the constraining layer 206 is 18 mm. The walls of the base layer 202 are 8mm thick. A distributed force (F) is exerted on the bottom of a beam, both with and without the cutout 210. This force is scaled such that the center of both beams is given an equal displacement. The cutout 210 in the hollow beam may be formed in one, or both, of opposing sidewalls of the hollow beam.

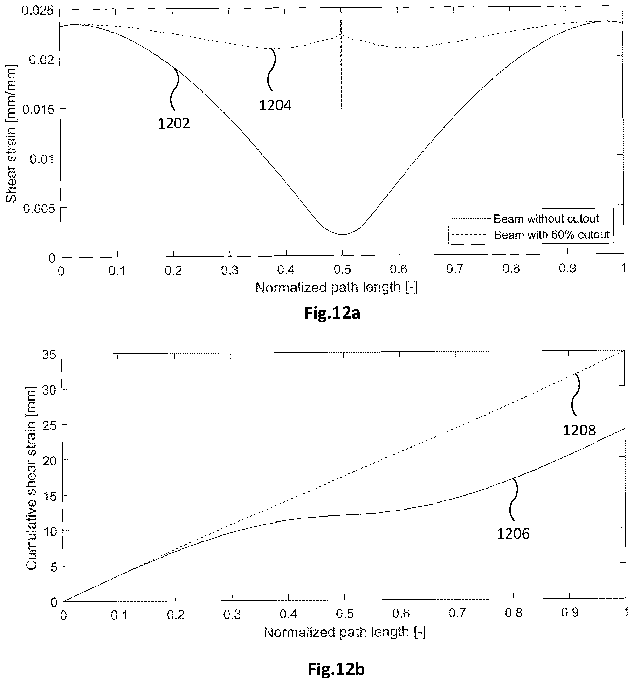

The shear strain in the VE layer exerted along its length was obtained by the FEM analysis for a beam, both with and without the cutout 210, and is presented in Figures 12a and 12b.

Figure 12a illustrates (i) the shear strain 1202 in the hollow beam of Figure 11 without a cutout, along its path length; and (ii) the shear strain 1204 in the hollow beam of Figure 11 with a cutout having a height $H_{cutout}$ that is 60% of the height of base layer 202, along its path length.

Figure 12a directly shows the shear strain in the VE layer 204, which shows a similar behaviour as explained with reference to Figure 10a and 10b. The hollow beam without a cutout shows a clear shear strain decrease towards the center, while the beam with a 60% cutout barely shows a shear strain decrease.

Figure 12b illustrates (i) the cumulative shear strain 1206 in the hollow beam of Figure 11 without a cutout, along its path length; and (ii) the cumulative shear strain 1208 in the hollow beam of Figure 11 with a cutout having a height $H_{cutout}$ that is 60% of the height of base layer 202, along its path length.

Figure 12b shows the cumulative shear strain, which confirms that the main difference between the two concepts is made around the center of the beam. This becomes visible after the first 20% of the path length (towards the center), as this is where the two curves start to significantly deviate from each other. The total cumulative shear strain is significantly higher for the hollow beam of Figure 11 with the cutout than for the hollow beam of Figure 11 without the cutout, indicating that the hollow beam of Figure 11 with the cutout will provide significantly more damping than the hollow beam of Figure 11 without the cutout.

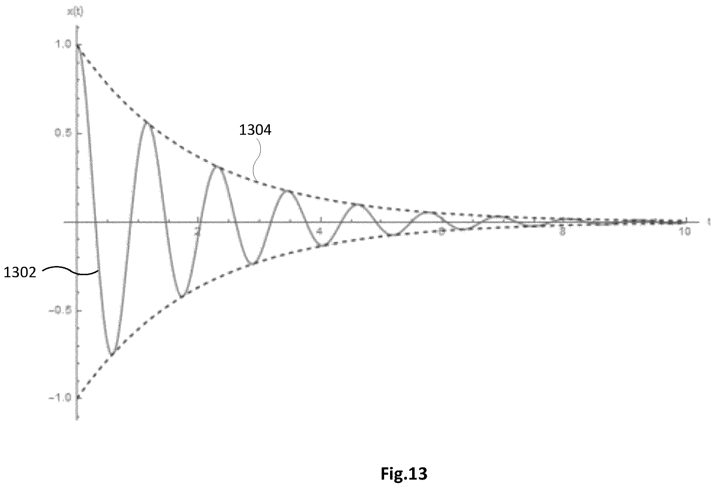

Increasing the damping of a structure can be particularly useful for decreasing the settling time. The under-damped free response of a mass-spring-damper system given nonzero initial conditions is illustrated in Figure 13.

The curve 1302 is characterized by the following equation:

$$u(t) = Ae^{-\zeta\omega_n t}\sin(\omega_n t + \varphi)$$

Where u(t) is the displacement of the mass, $\omega_n$ is the natural frequency, $\zeta$ is the relative damping and $\phi$ is the phase. The line 1304 in Figure 13 indicates the exponential decay rate of the vibration, which is proportional to both $\omega_n$ and $\zeta$. For this reason, for decay rate (and thus settling time) it is equally effective to increase the natural frequency of a system as it is to increase the relative damping. This is why introducing the cutout 210 (and other forms of weakening feature described herein) can lead to significantly shorter settling times, provided that the natural frequency of the beam does not drop by a significant amount.

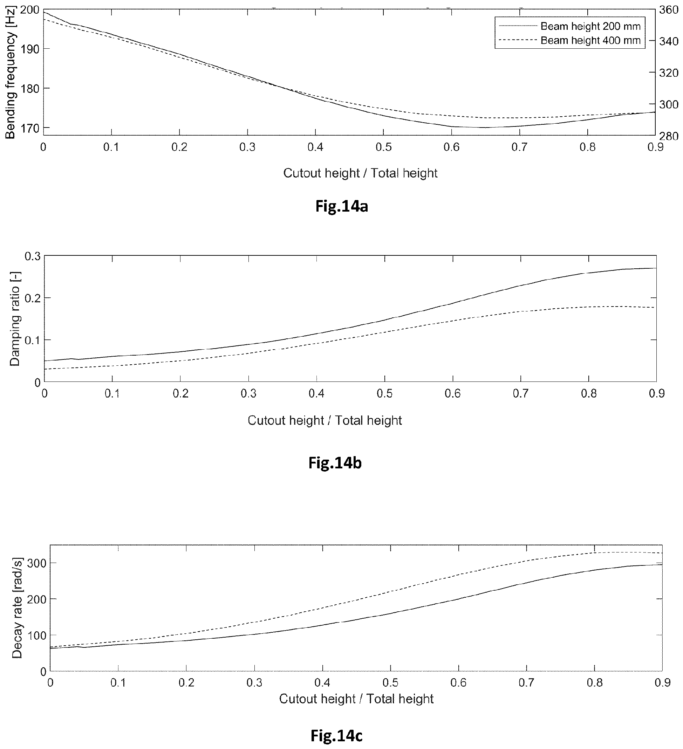

By locally weakening the beam around its center, the latter condition could be a possible concern. Therefore, a harmonic response analysis was conducted for two beams of 200mm and 400mm height, using varying cutout heights. From this analysis, the natural frequency of the first bending mode and damping ratio were extracted. These results are presented in Figures 14a-c, where bending frequency (Figure 14a), damping ratio (Figure 14b), and resulting exponential decay rate (Figure 14c), are presented for the two beams against (normalized) cutout height. The x-axis of the Figures 14a-c represents the height of the cutout 210 compared to the total height of the base layer 202 of the beam, such that a value of 0.5 indicates that the height of the cutout 210 is 50% of the height of base layer 202.

From Figure 14a, it can be observed that the frequency drops linearly until a cutout height of approximately 0.5-0.6 times the beam height. After this, increasing the cutout height does not influence the frequency significantly. Typically, the maximum frequency drop is around 10-15%, indicating that the constrained layer damper component 200 according to embodiments of the present disclosure is able to retain most of its original stiffness (without the cutout). Figure 14b shows that damping ratio increases significantly with increasing cutout height, approximately up to a factor 5 at the most extreme case. Together, this means the exponential decay rate will also increase, as shown in Figure 14c, from approximately 75 without a cutout to 300 with an optimum cutout, resulting in a four times faster settling time.

Summarized, it can be seen that the constrained layer damper component 200 incorporating the cutout 210 allows to significantly reduce the settling time of the component by increasing the damping while retaining high natural frequency. This can be achieved using existing manufacturing techniques and widely used base materials, resulting in a low complexity effective solution.

The advantages described herein can also be achieved with other forms of weakening feature (other than the cutout) as described above.

Whilst embodiments have been described above with reference to the weakening feature comprising a cutout 210, alternatively the weakening feature may comprise a material having a Young's modulus that is less than a Young's modulus of a material of the base layer 202. These embodiments provide the localized portion of the constrained layer damper component having a reduced bending stiffness by reducing the Young's modulus (*E*) to reduce the factor *EI*.

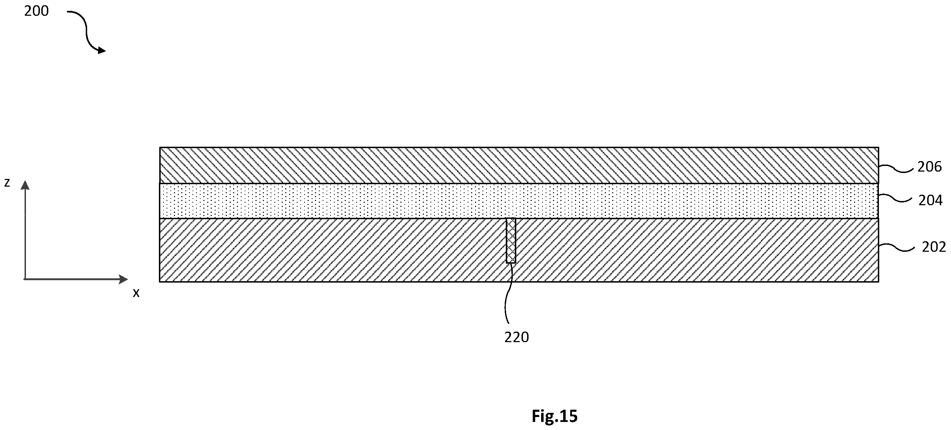

Figure 15 illustrates a side view of a constrained layer damper component 200 according to some embodiments of the present disclosure. The constrained layer damper component 200 shown in Figure 15 corresponds to the constrained layer damper component 200 with the exception of the cutout 210 being replaced with material 220 having a Young's modulus that is less than a Young's modulus of a material of the base layer 202. As a mere example, the base layer 202 may be steel (having a Young's modulus, E = 210 GPa) and the material 220 may be aluminum (having a Young's modulus, E = 70 GPa).

The material 220 may extend horizontally through the full width of the base layer 202 in a direction along the y-axis orthogonal to the z-axis of the constrained layer damper component 200.

Alternatively, the material 220 may not extend through the full width of the base layer 202 in a direction along the y-axis, and instead extend through only a portion of the width of the base layer 202 in a direction along the y-axis. In one example, the material 220 may extend from a sidewall of the base layer 202 into the interior of the base layer 202 without extending to the opposing sidewall of the base layer 202. In another example, the material 220 may not extend to either sidewall of the base layer 202.

As shown in Figure 15, the material 220 may originate from the upper surface of the base layer 202 and extend vertically downwards in a direction along the z-axis of the constrained layer damper component 200 towards the lower surface of the base layer 202.

In other implementations, a portion of the base layer may extend vertically in a direction along the z-axis between the upper surface of the base layer 202 and the material 220. For example, a cavity in the base layer 202 may be formed by drilling a hole which extends through the width of the base layer 202 in a direction along the y-axis, and a piece of the material 220 may be inserted into the cavity. For example, a portion of base layer 202 may extend vertically in a direction along the z-axis between the upper surface of the base layer 202 and the top of the hole, and a portion of base layer 202 may extend vertically in a direction along the z-axis between the bottom of the hole and the lower surface of the base layer 202.

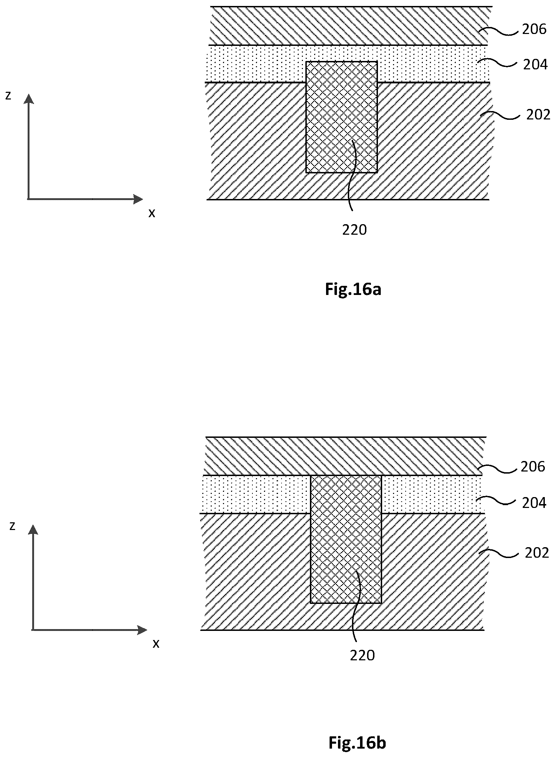

Figure 16a illustrates a side view of a portion of an example constrained layer damper component 200 whereby both the base layer 202 and the VE layer 204 comprise the material 220. As shown in Figure 16a, in this example the material 220 does not extend through the full height of the VE layer 204, such that a portion of the VE layer 204 extends vertically in a direction along the z-axis between the upper surface of the VE layer 204 and the material 220.

Figure 16b illustrates a side view of a portion of another example constrained layer damper component 200 whereby both the base layer 202 and the VE layer 204 comprise the material 220. As shown in Figure 16b, in this example the material 220 extends through the full height of the VE layer 204, and the material 220 originates from the upper surface of the VE layer 204 and extends vertically downwards in a direction along the z-axis of the constrained layer damper component 200 towards the lower surface of the base layer 202.

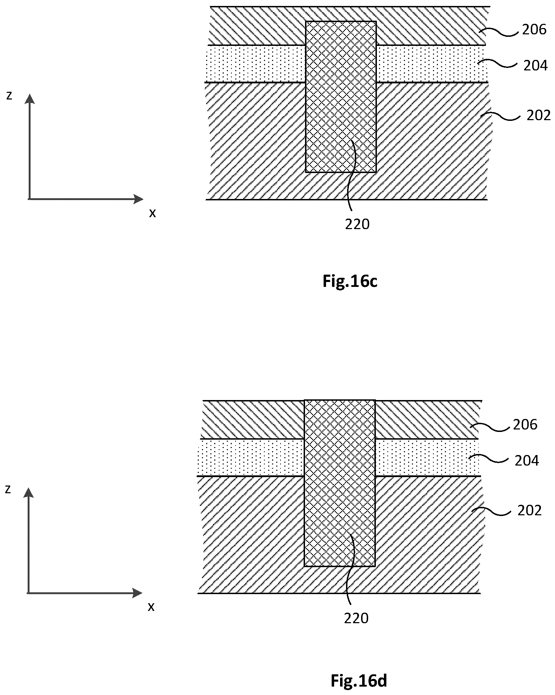

Figure 16c illustrates a side view of a portion of another example constrained layer damper component 200 whereby each of the base layer 202, the VE layer 204, and the constraining layer 206 comprise the material 220. As shown in Figure 16c, in this example the material 220 does not extend through the full height of the constraining layer 206, such that a portion of the constraining layer 206 extends vertically in a direction along the z-axis between the upper surface of the constraining layer 206 and the material 220.

Figure 16d illustrates a side view of a portion of another example constrained layer damper component 200 whereby each of the base layer 202, the VE layer 204, and the constraining layer 206 comprise the material 220. As shown in Figure 16d, in this example the material 220 extends through the full height of the constraining layer 206.

Whilst in the examples of Figure 15 and 16a-d, a portion of base layer 202 may extend vertically in a direction along the z-axis between the bottom of the material 220 and the lower surface of the base layer 202, this is merely an example. In the examples of Figure 15 and 16a-d, the material 220 may extends through the full height of the base layer 202.

Whilst for ease of illustration Figure 15 and 16a-d show the material 220 as having a rectangular cross-sectional shape, it will be appreciated that the material 220 may not have a perfectly rectangular cross-sectional shape due to the manufacturing technique employed to create the piece of material 220. Furthermore, embodiments are not limited to the material 220 formed in one or more layers of the constrained layer damper component having a generally rectangular cross-sectional shape. For example, the material 220 formed in one or more layers of the constrained layer damper component may have a circular, triangular or other cross-sectional shape.

The material 220 may be located at the center of the length (in a direction along the x-axis) of the constrained layer damper component 200, or located in a central region (as defined herein) along the length of the constrained layer damper component 200, for example in embodiments whereby the constrained layer damper component 200 is supported at both ends (along its length) e.g. as a two-sided suspension,
The material 220 may be located closer to an end of the constrained layer damper component 200 than to the center of the length of the constrained layer damper component 200, for example in embodiments whereby the constrained layer damper component 200 is supported at only a single end e.g. as a single-sided suspension (cantilever).

The weakening feature may also comprise a portion of the constrained layer damper component 200 having a reduced width in a direction along the y-axis orthogonal to the z-axis of the constrained layer damper component, compared to (e.g. all) the remaining portions of the constrained layer damper component 200. These embodiments provide the localized portion of the constrained layer damper component having a reduced bending stiffness by reducing the second moment of area (*I*) to reduce the factor *EI.*

The portion of the constrained layer damper component 200 having the reduced width may be located at the center of the length (in a direction along the x-axis) of the constrained layer damper component 200, or located in a central region (as defined herein) along the length of the constrained layer damper component 200, for example in embodiments whereby the constrained layer damper component 200 is supported at both ends (along its length) e.g. as a two-sided suspension

The portion of the constrained layer damper component 200 having the reduced width may be located closer to an end of the constrained layer damper component 200 than to the center of the length of the constrained layer damper component 200, for example in embodiments whereby the constrained layer damper component 200 is supported at only a single end e.g. as a single-sided suspension (cantilever).

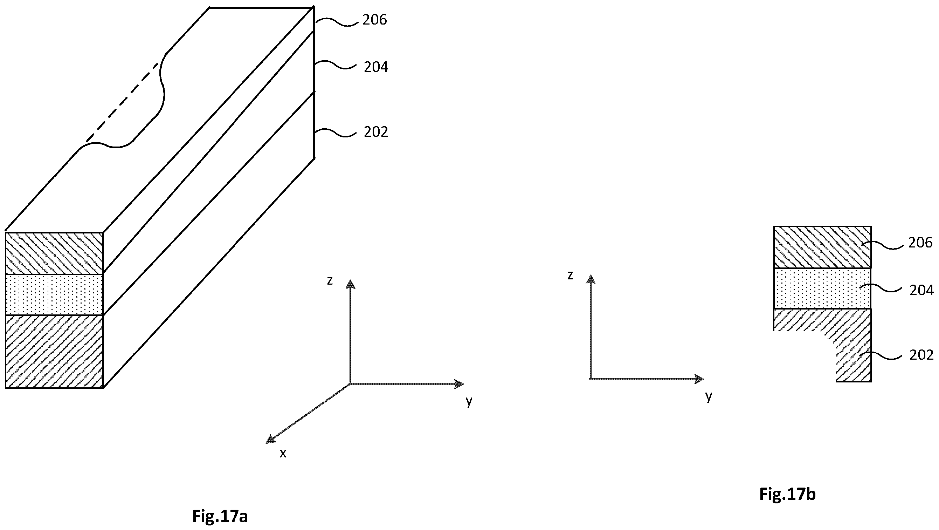

As a mere example, Figure 17a illustrates a perspective view of a constrained layer damper component 200 in the form of a solid beam which comprises a portion having the reduced width.

As shown in Figure 17a, a portion of the constraining layer 206, along the length of the constrained layer damper component 200, may comprise the reduced thickness. In embodiments whereby a portion of the constraining layer 206 comprises the reduced thickness, a portion of the VE layer 204 adjacent to the portion of the constraining layer 206 having the reduced thickness, may also have a reduced thickness (by the same or differing amount).

Alternatively, as shown in in Figure 17b, a portion of the base layer 202 along the length of the constrained layer damper component 200 may comprise the reduced thickness. In embodiments whereby a portion of the base layer 202 comprises the reduced thickness, a portion of the VE layer 204 adjacent to the portion of the base layer 202 having the reduced thickness, may also have a reduced thickness (by the same or differing amount).

In some embodiments, all of the base layer 202, VE layer 204 and constraining layer 206 may have a reduced thickness to provide the localized portion of the constrained layer damper component having the reduced width compared to (e.g. all) the remaining portions of the constrained layer damper component.

It will be appreciated that whilst Figure 17a illustrates a constrained layer damper component 200 in the form of a solid beam, the localized portion having the reduced width may be implemented in other forms of constrained layer damper component 200 for example a hollow beam, plate, or other member. For example, when the constrained layer damper component 200 is in the form of a hollow beam, the localized portion having the reduced width may comprise the base layer 202 of one (or both) sidewalls of the hollow beam having the reduced thickness.

Whilst the different types of weakening features have been described individually, the different types of weakening features described herein may also be used in combination. For example, embodiments extend to a constrained layer damper component 200 having a localized portion having the reduced width compared to (e.g. all) the remaining portions of the constrained layer, and additionally comprising the cutout 210 (as described herein). In another example, a cutout 210 may be present in the base layer 202 in combination with a material 220 having a Young's modulus that is less than a Young's modulus of a material of the base layer 202 being present in the VE layer 204 and/or constraining layer 206.

The constrained layer damper component according to aspects of the present disclosure may comprise only a single weakening feature (which may comprise one or more of the example types of weakening feature described herein) such that no other weakening feature is provided at any other point along the length of the constrained layer damper component.

The constrained layer damper component according to aspects of the present disclosure may be incorporated into an apparatus whereby the constrained layer damper component is in an ambient (non-vacuum) environment. Furthermore constrained layer damper component according to aspects of the present disclosure may be incorporated into an apparatus whereby the constrained layer damper component is in a vacuum. In these embodiments the VE layer 204 may comprise Viton® or other vacuum compatible materials.

The constrained layer damper component according to aspects of the present disclosure may be incorporated into a lithographic apparatus (e.g. wafer stage arm). Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

The constrained layer damper component according to aspects of the present disclosure may be incorporated into a lithographic apparatus such as the lithographic apparatus LA described above. A metrology tool MT (such as a scatterometer, topography measurement system, or position measurement system mentioned above), an inspection apparatus, a particle beam apparatus, a robotic apparatus, or an etching apparatus may also comprise the constrained layer damper component according to aspects of the present disclosure.

Although specific reference may be made in this text to embodiments of the invention in the context of a lithographic apparatus, the constrained layer damper component 200 may also be used in other apparatuses. Embodiments of the invention may form part of a mask inspection apparatus, a metrology apparatus, or any apparatus that measures or processes an object such as a wafer (or other substrate) or mask (or other patterning device). These apparatus may generally be referred to as a lithographic tool. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and the constrained layer damper component 200 may be used in apparatus used in other applications, for example imprint lithography.

Furthermore the constrained layer damper component 200 may also be used in an etching machine, pick and place machine, or a robotic apparatus (e.g. a moving arm of robotic apparatus).

Further embodiments are disclosed in the subsequent list of numbered clauses:

1. A constrained layer damper component, comprising:

    a base layer having a lower surface and an upper surface;
    a constraining layer;
    a viscoelastic layer between the base layer and the constraining layer; and
    a weakening feature arranged to provide a localized portion of the constrained layer damper component having a reduced bending stiffness compared to remaining portions of the constrained layer damper component.

2. The constrained layer damper component of clause 1, wherein the weakening feature extends through the full width of the constrained layer damper component in a direction along an axis orthogonal to a longitudinal axis of the constrained layer damper component.
3. The constrained layer damper component of clause 1, wherein the weakening feature extends through a portion of the width of the constrained layer damper component in a direction along an axis orthogonal to a longitudinal axis of the constrained layer damper component.
4. The constrained layer damper component of clause 2 or 3, wherein the base layer comprises the weakening feature.
5. The constrained layer damper component of clause 4, wherein the weakening feature extends in the direction along the longitudinal axis from the upper surface of the base layer towards the lower surface of the base layer.
6. The constrained layer damper component of clause 4, wherein a portion of the base layer extends in a direction along the longitudinal axis between the upper surface of the base layer and the weakening feature.
7. The constrained layer damper component of clause 4, wherein the viscoelastic layer comprises at least a portion of the weakening feature.
8. The constrained layer damper component of clause 7, wherein the weakening feature extends in the direction along the longitudinal axis from an upper surface of the viscoelastic layer towards the lower surface of the base layer.
9. The constrained layer damper component of clause 7, wherein a portion of the viscoelastic layer extends in a direction along the longitudinal axis between an upper surface of the viscoelastic layer and the weakening feature.

10. The constrained layer damper component of clause 7, wherein the constraining layer comprises at least a portion of the weakening feature.

11. The constrained layer damper component of any preceding clause, wherein the weakening feature comprises a cutout forming a cavity in the constrained layer damper component, the cutout extending in a direction along an axis orthogonal to a longitudinal axis of the constrained layer damper component.

12. The constrained layer damper component of clause 11, wherein a portion of the base layer extends in a direction along the longitudinal axis between the lower surface of the base layer and the cutout.

13. The constrained layer damper component of clause 12, wherein the weakening feature extends in the direction along the longitudinal axis to have a height that is at least 40% of a height of base layer, optionally at least 50% of the height of base layer, further optionally at least 60% of the height of base layer.

14. The constrained layer damper component of clause 12 or 13, wherein the weakening feature extends in the direction along the longitudinal axis to have a height that is less than or equal to 80% of the height of base layer, optionally less than or equal to 75% of the height of base layer, further optionally less than or equal to 70% of the height of base layer.

15. The constrained layer damper component of any preceding clause, wherein the weakening feature comprises a material having a Young's modulus that is less than a Young's modulus of a material of the base layer.

16. The constrained layer damper component of any preceding clause, the localized portion of the constrained layer damper component having a reduced width in a direction along an axis orthogonal to a longitudinal axis of the constrained layer damper component, compared to the remaining portions of the constrained layer damper component.

17. The constrained layer damper component of clause 16, wherein the base layer comprises the localized portion having the reduced width.

18. The constrained layer damper component of clause 16 or 17, wherein the constraining layer comprises the localized portion having the reduced width.

19. The constrained layer damper component of clause 17 or 18, wherein the viscoelastic layer comprises the localized portion having the reduced width.

20. The constrained layer damper component of any preceding clause, wherein the weakening feature is located in a central region along the length of the constrained layer damper component, the central region having a length that is less than 50% of the length of the constrained layer damper component, the central region centered on the center of the length of the constrained layer damper component.

21. The constrained layer damper component of any preceding clause, wherein the weakening feature is located at the center of the length of the constrained layer damper component.

22. The constrained layer damper component of any of clauses 1 to 19, wherein the weakening feature is located closer to an end of the constrained layer damper component than to the center of the length of the constrained layer damper component.

23. An apparatus comprising the constrained layer damper component of any preceding clause.

24. The apparatus of clause 23, wherein the apparatus is one of: a metrology apparatus, an inspection apparatus, a lithographic apparatus, an etching apparatus, and a robotic apparatus.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

**1.** A constrained layer damper component, comprising:

a base layer having a lower surface and an upper surface;
a constraining layer;
a viscoelastic layer between the base layer and the constraining layer; and
a weakening feature arranged to provide a localized portion of the constrained layer damper component having a reduced bending stiffness compared to remaining portions of the constrained layer damper component.

**2.** The constrained layer damper component of claim 1, wherein the weakening feature extends through at least a portion of the width of the constrained layer damper component in a direction along an axis orthogonal to a longitudinal axis of the constrained layer damper component.

**3.** The constrained layer damper component of claim 2, wherein the base layer comprises the weakening feature.

**4.** The constrained layer damper component of claim 3, wherein the weakening feature extends in the direction along the longitudinal axis from the upper surface of the base layer towards the lower surface of the base layer.

**5.** The constrained layer damper component of claim 3, wherein a portion of the base layer extends in a direction along the longitudinal axis between the upper surface of the base layer and the weakening feature.

**6.** The constrained layer damper component of claim 3, wherein the viscoelastic layer comprises at least a portion of the weakening feature.

**7.** The constrained layer damper component of claim 6, wherein the weakening feature extends in the direction along the longitudinal axis from an upper surface of the viscoelastic layer towards the lower surface of the base layer.

**8.** The constrained layer damper component of any preceding claim, wherein the weakening feature comprises a cutout forming a cavity in the constrained layer damper component, the cutout extending in a direction along an axis orthogonal to a longitudinal axis of the constrained layer damper component.

**9.** The constrained layer damper component of any preceding claim, wherein the weakening feature comprises a material having a Young's modulus that is less than a Young's modulus of a material of the base layer.

**10.** The constrained layer damper component of any preceding claim, the localized portion of the constrained layer damper component having a reduced width in a direction along an axis orthogonal to a longitudinal axis of the constrained layer damper component, compared to the remaining portions of the constrained layer damper component.

**11.** The constrained layer damper component of claim 10, wherein the base layer comprises the localized portion having the reduced width.

**12.** The constrained layer damper component of claim 10 or 11, wherein the constraining layer comprises the localized portion having the reduced width.

**13.** The constrained layer damper component of any preceding claim, wherein the weakening feature is located at the center of the length of the constrained layer damper component.

**14.** The constrained layer damper component of any of claims 1 to 12, wherein the weakening feature is located closer to an end of the constrained layer damper component than to the center of the length of the constrained layer damper component.

**15.** An apparatus comprising the constrained layer damper component of any preceding claim, wherein the apparatus is one of: a metrology apparatus, an inspection apparatus, a lithographic apparatus, an etching apparatus, and a robotic apparatus.

SO
BD
IL
LA
MA
M2
M1
C
B
T
PM
W
P1
P2
PS
Z
X
Y
X
W
WT
IF
PW

Fig.1

LC
SC x 4
SCS
LACU
I/O1
BK
CH
BK
CH
RO
TCU
LB
LA
I/O2
CH
BK
CH
BK
DE x 4

Fig.2

LA
SC1
SC3
0
-1
+1
CL
MT
SC2

Fig.3

106
104
102
x
z
100

Fig. 4

106
104
102

Fig.5

206
204
202
210
200
x
z

Fig.6

202
210
x
z

Fig.7

206
204
202
z
x
210

Fig.8a

206
204
202
z
x
210

Fig.8b

206
204
202
z
x
210

Fig.8c

202
Central region
Center
$H_{cutout}$
$W_{cutout}$
210
$H_{baselayer}$
x
z

Fig.9a

202
Central region
Center
$H_{cutout}$
$W_{cutout}$
210
$H_{baselayer}$
x
z

Fig.9b

106
1002
104
102
1004
1002
Maximum shear strain
Zero shear strain

Fig.10a

206
1002
204
202
1004
210
1002
Maximum shear strain
Zero shear strain

Fig.10b

Side view
1600 mm
206
204
202
210
F
x
z
Cross-section
206
0.5 mm
200 mm
202
8 mm
100 mm
18 mm
204
y
z

Fig.11

Shear strain [mm/mm]
0.025
0.02
0.015
0.01
0.005
0
0
0.1
0.2
0.3
0.4
0.5
0.6
0.7
0.8
0.9
1
Normalized path length [-]
Beam without cutout
Beam with 60% cutout
1202
1204
Cumulative shear strain [mm]
35
30
25
20
15
10
5
0
0
0.1
0.2
0.3
0.4
0.5
0.6
0.7
0.8
0.9
1
Normalized path length [-]
1206
1208

Fig.12a

Fig.12b

1304
1302
x(t)
1.0
0.5
-0.5
-1.0
10

Fig.13

Bending frequency [Hz]
200
190
180
170
360
340
320
300
280
Beam height 200 mm
Beam height 400 mm
0
0.1
0.2
0.3
0.4
0.5
0.6
0.7
0.8
0.9
Cutout height / Total height

Fig.14a

Damping ratio [-]
0.3
0.2
0.1
0
0
0.1
0.2
0.3
0.4
0.5
0.6
0.7
0.8
0.9
Cutout height / Total height

Fig.14b

Decay rate [rad/s]
300
200
100
0
0
0.1
0.2
0.3
0.4
0.5
0.6
0.7
0.8
0.9
Cutout height / Total height

Fig.14c

206
204
202
220
x
z
200

Fig.15

206
204
202
z
x
220

Fig.16a

206
204
202
z
x
220

Fig.16b

206
204
202
z
x
220

Fig.16c

206
204
202
z
x
220

Fig.16d

206
204
202
z
y
206
204
202
z
y
x

Fig.17b

Fig.17a

# EUROPEAN SEARCH REPORT

Application Number
EP 24 21 5353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 701 624 B2 (ANDERSSON JONAS [SE]; JOSEFSSON PIERRE [SE] ET AL.) 22 April 2014 (2014-04-22) * figure 5 * ----- | 1-5,15 | INV. F16F9/30 |
| X | US 2021/270337 A1 (RUDEK DAVID [DE] ET AL) 2 September 2021 (2021-09-02) * figure 5 * * paragraphs [0023], [0048], [0050] * ----- | 1-3,6-9 | |
| X | US 11 199 235 B2 (3M INNOVATIVE PROPERTIES CO [US]) 14 December 2021 (2021-12-14) * figure 3 * ----- | 1,10,11, 13,14 | |
| X | US 10 093 073 B2 (NITTO DENKO CORP [JP]) 9 October 2018 (2018-10-09) * figure 3 * ----- | 1,10,12 | |

TECHNICAL FIELDS SEARCHED (IPC)

F16F

The present search report has been drawn up for all claims

| Place of search | Date of completion of the search | Examiner |
|---|---|---|
| The Hague | 16 April 2025 | Beaumont, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 5353

This annex lists the patent family members relating to the patent documents cited in the above-mentioned European search report. The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 8701624 B2 | 22-04-2014 | CN 102265013 A | 30-11-2011 |
| | | EP 2368029 A1 | 28-09-2011 |
| | | JP 2012513557 A | 14-06-2012 |
| | | KR 20110135854 A | 19-12-2011 |
| | | US 2012067322 A1 | 22-03-2012 |
| | | WO 2010074651 A1 | 01-07-2010 |
| US 2021270337 A1 | 02-09-2021 | CN 112334678 A | 05-02-2021 |
| | | EP 3587851 A1 | 01-01-2020 |
| | | JP 2021530652 A | 11-11-2021 |
| | | US 2021270337 A1 | 02-09-2021 |
| | | WO 2020003241 A1 | 02-01-2020 |
| US 11199235 B2 | 14-12-2021 | CA 2989582 A1 | 22-12-2016 |
| | | CN 107810344 A | 16-03-2018 |
| | | EP 3308054 A1 | 18-04-2018 |
| | | JP 6867308 B2 | 28-04-2021 |
| | | JP 2018521275 A | 02-08-2018 |
| | | KR 20180018666 A | 21-02-2018 |
| | | US 2018156296 A1 | 07-06-2018 |
| | | WO 2016205357 A1 | 22-12-2016 |
| US 10093073 B2 | 09-10-2018 | CN 104755004 A | 01-07-2015 |
| | | DK 2861121 T3 | 28-06-2021 |
| | | EP 2674091 A1 | 18-12-2013 |
| | | EP 2861121 A1 | 22-04-2015 |
| | | JP 6101347 B2 | 22-03-2017 |
| | | JP 2015531695 A | 05-11-2015 |
| | | US 2015147511 A1 | 28-05-2015 |
| | | WO 2013185926 A1 | 19-12-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A